# EUROPEAN PATENT APPLICATION

(11) **EP 1 314 702 A2**
(43) Date of publication of application: **28.05.2003**
(21) Application number: 02024748.2
(22) Date of filing: 06.11.2002
(51) Int. Cl.: C03B 23/023, C03B 40/00, C03B 23/025, C03B 23/03, C03B 35/20

(54) **Method of bending a glass sheet**

(30) Priority: 22.11.2001 JP 2001357198
(71) Applicant: Murakami Corporation, Shizuoka-shi, Shizuoka (JP)
(72) Inventor: Hanada, Takenao, 748,Hyodayu,Fujieda-shi,Shizuoka (JP); Okuda, Sunao, 4-40-13 Higashi-machi,Koganei-shi,Tokyo (JP)
(74) Representative: Strehl Schübel-Hopf & Partner

(57) **Abstract**

A glass plate 2 is supported on a heat-resistant fiber sheet 3 stretched on a support base 1A of a carriage 1 without using a ring-shaped holding tool. The glass plate 2 transported on the carriage 1 into a furnace undergoes press working together with the heat-resistant fiber sheet utilizing a press-working mold in the furnace. The glass plate 2 can be bent evenly without leaving any traces on the worked surface of the glass plate.

## Description

### BACKGROUND OF THE INVENTION

This invention relates to methods of forming a curved shape of a glass plate, and more particularly to such a method of forming a curved shape of a glass plate as lends itself to press working and gravitational bending.

Among a variety of methods of forming a curved shape of a glass plate, the gravitational bending process utilizing the weight of the glass plate itself is generally known in the art. This process follows the steps of placing part of a glass plate to be formed on a frame provided at a brim of a bending mold, heating and bending the glass plate placed on the frame utilizing its own weight, and thereafter gradually cooling the glass plate to establish a desired shape thereof. In the field of automotive manufacturing, the gravitational bending process is used to form a various types of members made of glass, which includes a windshield, a rear windowpane, a side windowpane, and others.

Another known technique for gravitational bending of this type includes the steps of placing a tabular glass plate over a working surface of a furnace curved in a predetermined manner, heating the glass plate in the furnace while attracting the glass plate toward the working surface of the furnace, and bending the glass plate with the help of its own weight.

On the other hand, a method of forming a predetermined curved shape of a glass plate by utilizing a press-working device while heating the glass plate in a furnace is known (*see* JP 6-305755 A). In addition, JP 2001-164442 A discloses a method of enhancing the strength of a glass plate and a heat-resistant metal fabric used therefor, in which the glass plate is bent together with the heat-resistant metal fabric, and cooling fluid is passed through the heat-resistant metal fabric to quench the glass plate.

However, the method for gravitational bending by attraction toward the working surface of the furnace and application of heat could not sufficiently control (regulate) temperature of a side of the glass plate facing the working surface of the furnace, and would thus result in uneven temperature distribution of the glass plate, which would disadvantageously make it difficult to bend the glass plate evenly. Further, the roughness of the working surface of the furnace is likely to be transferred to the glass plate, and thus the working surface of the furnace need be kept clean.

On the other hand, the method of bending the glass plate utilizing a press-working device (as disclosed in JP 6-305755) could cause such a problem entailed by holding the glass plate with a ring-shaped holding tool that traces of working by the holding tool would remain on the surface of the resultant glass plate.

### SUMMARY OF THE INVENTION

It is an exemplified first object of the present invention to provide a method of forming a curved shape of a glass plate that can bend the glass plate evenly without leaving any traces on the worked surface of the glass plate.

It is an exemplified second object of the present invention to provide a method of forming a curved shape of a glass plate that can enhance maintainability of a working surface of a furnace toward which the glass plate is to be attracted.

In order to achieve these objects, the inventors have made the present invention which may have the following arrangements.

### [FIRST ARRANGEMENT]

A method of forming a curved shape of a glass plate according to one exemplified aspect of the present invention comprises the steps of: placing the glass plate on a heat-resistant fiber sheet having an area larger than that of the glass plate; supporting the glass plate with the heat-resistant fiber sheet by holding a portion of the heat-resistant fiber sheet on which the glass plate is not placed; transporting the glass plate; softening the glass plate; and forming a curved shape of the glass plate.

With this arrangement, the glass plate can be bent evenly without leaving any traces of a holding tool or the like on the worked surface of the glass plate.

### [SECOND ARRANGEMENT]

According to another exemplified aspect of the present invention, in addition to every element of the first arrangement, the above placing step includes covering a frame-shaped support base with the heat-resistant fiber sheet of which the area is larger than that of the support base, and the above supporting step includes stretching the heat-resistant fiber sheet on the frame-shaped support base utilizing a weight hung on a periphery of the heat-resistant fiber sheet. Further, the above transporting step is performed utilizing a carriage on which the placing and supporting steps have been performed.

With this arrangement, the use of the carriage having the frame-shaped support base covered with the heat-resistant fiber sheet and the weight for stretching the heat-resistant fiber sheet can make it possible to perform the transporting, softening, and the curved-shape forming of the glass plate under such a condition that the glass plate is stably supported through the heat-resistant fiber sheet. Moreover, the sag of the heat-resistant fiber sheet can be adequately adjusted using the weight. Further, since the heat-resistant fiber sheet is stretched on the support base using the weight hung on the periphery of the heat-resistant fiber sheet, variations of the weights of the glass plate to be formed can be accommodated by changing the weight to adjust the tensile force of the heat-resistant fiber sheet; therefore this arrangement is broadly applicable to glass plates of different weights. Furthermore, since the frame-shaped support base is designed to hold a portion of the heat-resistant fiber sheet on which the glass plate is not placed, the curved shape of the glass plate can be formed with the glass plate placed on the heat-resistant fiber sheet without adversely affecting the curved-surface formation.

To be more specific, for example, transport into the furnace, transport from the furnace to the press-working device or the like, formation of the curved shape with the press-working device, transport from the press-working device or the like, or any other operations can be performed on and utilizing the above carriage.

### [THIRD ARRANGEMENT]

According to yet another exemplified aspect of the present invention, in addition to every element of the first or second arrangement, the above forming step includes utilizing a pair of upper and lower molds to form the glass plate together with the heat-resistant fiber sheet into a predetermined curved shape.

With this arrangement, the glass plate can be bent evenly without leaving any traces of a holding tool or the like on the worked surface of the glass plate.

### [FOURTH ARRANGEMENT]

According to yet another exemplified aspect of the present invention, in addition to every element of the third arrangement, an upper heat-resistant fiber sheet is interposed between the upper mold and the glass plate.

This arrangement serves to facilitate protection and separation of the mold, and to keep the surface condition of the upper mold side of the glass plate excellent.

### [FIFTH ARRANGEMENT]

According to yet another exemplified aspect of the present invention, in addition to every element of the first, second, third, or fourth arrangement, the above forming step includes: gravitational bending performed by keeping the glass plate on the heat-resistant fiber sheet after the step of softening the glass plate; and press working to form the glass plate into a predetermined curved shape.

This arrangement enables small curvature of the curved shape of the glass plate, and a smooth operation of the press-working process.

In order to carry out a gravitational bending operation with the glass plate placed on the heat-resistant fiber sheet, for example in the case where the carriage as described in the second arrangement is utilized, a sag may be given beforehand in the heat-resistant fiber sheet on which the glass plate is placed, and then the glass plate may be softened to undergo a gravitational bending process. Alternatively, the glass plate may be softened, and thereafter the glass plate placed on the heat-resistant fiber sheet may be placed on the lower mold for press working to undergo a gravitational bending process.

### [SIXTH ARRANGEMENT]

According to yet another exemplified aspect of the present invention, in addition to every element of the first or second arrangement, the above forming step includes gravitational bending performed by keeping the glass plate on the heat-resistant fiber sheet after the step of softening the glass plate to form the glass plate into a predetermined curved shape.

With this arrangement, the glass plate can be bent evenly without leaving any traces of a holding tool or the like on the worked surface of the glass plate.

Specifically, for example, the glass plate may be softened, and thereafter the glass plate placed on the heat-resistant fiber sheet may be placed on the working surface of the furnace shaped in the predetermined curved shape to undergo a gravitational bending process. In this case, thanks to the heat-resistant fiber sheet interposed between the glass plate and the working surface of the furnace, maintainability of the working surface of the furnace can be enhanced.

Other objects and further features of the present invention will become readily apparent from the following description of preferred embodiments with reference to accompanying drawings.

### BRIEF DESCRIPTION OF THE DRAWINGS

FIG. 1 is a side elevation of a carriage used for one embodiment of a method of forming a curved shape of a glass plate according to the present invention.
FIG. 2 is a chart showing a first step of the one embodiment of the method of forming a curved shape of a glass plate.
FIG. 3 is a chart showing a second step of the one embodiment of the method of forming a curved shape of a glass plate.
FIG. 4 is a chart showing a third step of the one embodiment of the method of forming a curved shape of a glass plate.
FIG. 5 is a chart showing a fourth step of the one embodiment of the method of forming a curved shape of a glass plate.
FIG. 6 is a chart showing a fifth step of the one embodiment of the method of forming a curved shape of a glass plate.
FIG. 7 is a diagram for explaining each section in a furnace.
FIG. 8 is a chart showing a step of another embodiment of the method of forming a curved shape of a glass plate.

### DETAILED DESCRIPTION OF THE PREFERRED EMBODIMENTS

A description will hereinafter be given of preferred embodiments of a method of forming a curved shape of a glass plate according to the present invention with reference to the drawings.

### [FIRST EMBODIMENT]

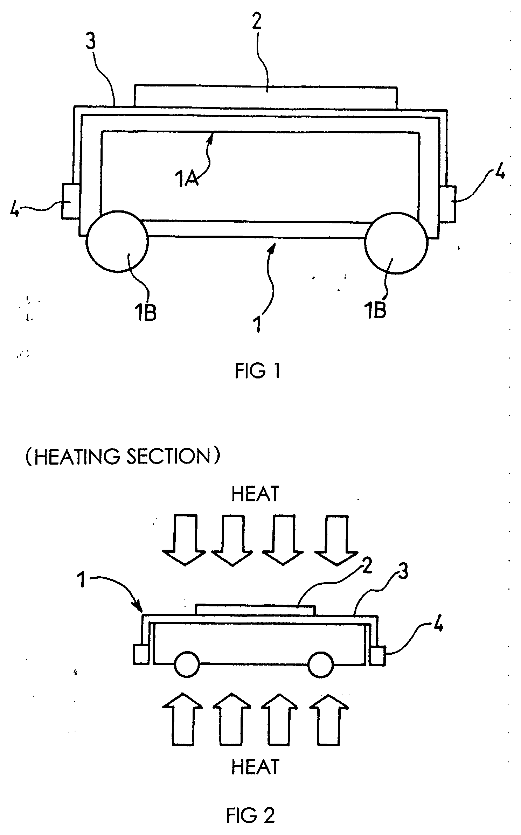

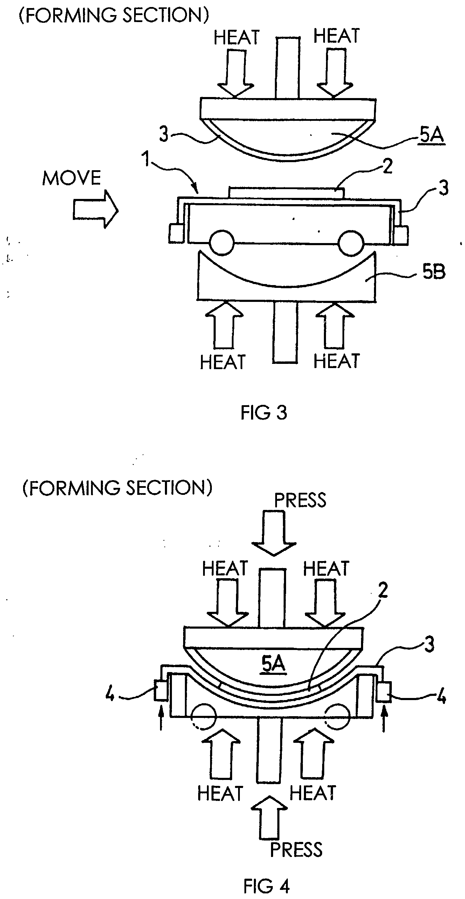

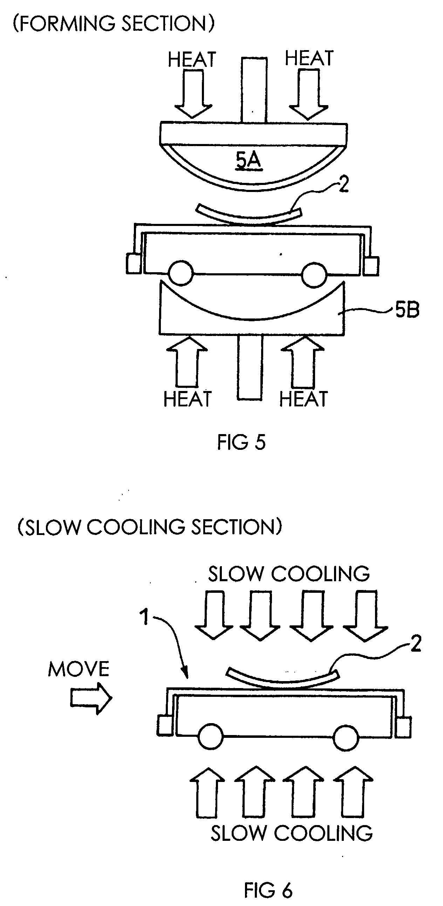

FIG. 1 is a side elevation of a carriage used for one embodiment (first embodiment) of a method of forming a curved shape of a glass plate according to the present invention, and FIGs. 2 through 6 are charts showing the steps of the method of forming a curved shape of a glass plate according to the first embodiment of the present invention. FIG. 2 shows a first step (heating section); FIG. 3 shows a second step (forming section); FIG. 4 shows a third step (forming section); FIG. 5 shows a fourth step (forming section); and FIG. 6 shows a fifth step (slow cooling section).

The method of forming a curved shape of a glass plate according to the first embodiment of the present invention is implemented utilizing a carriage 1 having a frame-shaped support base 1A, as shown in FIG. 1. The carriage 1 can move with front/rear four wheels 1B, and a heat-resistant fiber sheet 3 on which a glass plate 2 as a work is to be placed is stretched on the support base 1A.

The support base 1A of the carriage 1 has an opening so large as to accommodate the glass plate 2 inside, which opening is designed to have dimensions that receives a press-working mold as will be described later.

The heat-resistant fiber sheet 3 may be for example made of heat-resistant cloth of stainless steel fiber, which is made of stainless steel including C, Ni, Si, Mn, Mo, and the like. Alternatively, heat-resistant cloth with the above stainless steel fiber and ceramic fiber woven therein, heat-resistant cloth made of the stainless steel fiber and/or the ceramic fiber, heat-resistant cloth made of polyparaphenylenebenzobisoxazol fiber or with polyparaphenylenebenzobisoxazole fiber and stainless steel fiber woven therein, glass fiber, or the like may be used as well. The heat-resistant fiber sheet 3 has an appropriate level of elasticity in all directions parallel to its plane, and has an appropriate level of cushioning property in a thickness direction. The heat-resistant fiber sheet 3 as described above is shaped in the form of a sheet large enough to cover the support base 1A of the carriage 1, and a plurality of weights 4 are detachably hung on a periphery of the heat-resistant fiber sheet 3, so that the sheet 3 is stretched on the support base 1A with a predetermined tension.

The weights 4 may be changed as appropriate according to the weight of the glass plate 2 so as to prevent the heat-resistant fiber sheet 3 from sagging when the glass plate 2 is placed on the heat-resistant fiber sheet 3.

In operation, according to the first embodiment of the method of forming a curved shape of a glass plate, first, the heat-resistant fiber sheet 3 is provided on the support base 1A of the carriage 1, so that the heat-resistant fiber sheet 3 is stretched with a predetermined tension that is adjusted by changing the weights 4 according to the weights of the glass plate 2 as a work. Upon thus-provided heat-resistant fiber sheet 3 stretched on the support base 1A, the glass plate 2 is placed.

Next, in the first step, as shown in FIG. 2, the carriage 2 in which the glass plate 2 is placed on the heat-resistant fiber sheet 3 is transported into a heated atmosphere in the furnace. The glass plate 2 is heated under the temperature condition approximating the softening point of the glass plate 2 at a heating section in the furnace, and undergoes gravitational bending process utilizing the weight of the glass plate 2 itself. At that stage, the heat-resistant fiber sheet 3 supporting the glass plate 2 has an appropriate level of elasticity in all directions parallel to its plane, and thus expands or contracts along a curved surface of the glass plate 2 without becoming wrinkled.

Subsequently, in the second step, as shown in FIG. 3, the carriage 1 is moved in the furnace to position the glass plate 2 between an upper mold 5A and a lower mold 5B of a press-working mold 5 installed in advance at a forming section in the furnace. Then, in the third step, as shown in FIG. 4, the glass plate 2 undergoes a press working into a desired curve together with the heat-resistant fiber sheet 3 between the upper mold 5A and the lower mold 5B of the press-working mold 5. Upon pressing operation, the weights move upward without hindrance. Even during the press-working process, the heat-resistant fiber sheet 3 is prevented from becoming wrinkled thanks to the elasticity in all directions parallel to its plane.

Thereafter, in the fourth step, as shown in FIG. 5, the shaped glass plate 2 is separated from the upper mold 5A and the lower mold 5B of the press-working mold 5, and subsequently in the fifth step, as shown in FIG. 6, the carriage 1 is moved in the furnace to a slow cooling section in which the shaped glass plate 2 is gradually cooled.

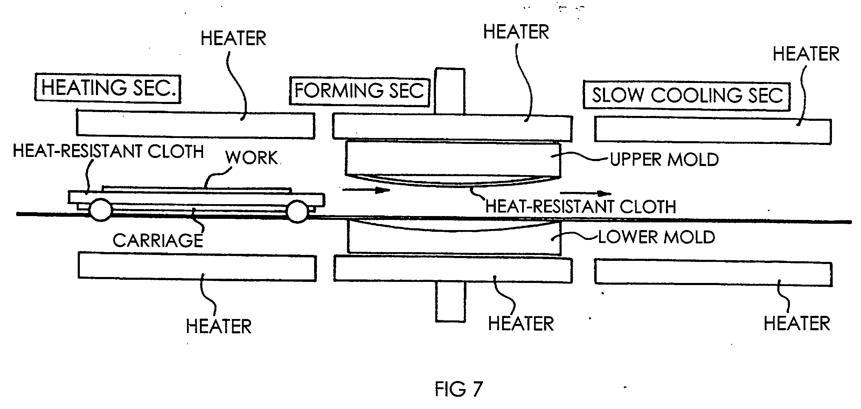

As shown in FIG. 7, the inside of the furnace is comprised of three sections of a heating section, a forming section, and a slow cooling section. When the both sides of the glass plate 2 are heated at the heating section and the temperature thereof reaches a predetermined temperature, the carriage 1 moves to the forming section, and a press-working process is performed. Thereafter, the carriage 1 moves to the slow cooling section, and the glass plate 2 is gradually cooled.

### [SECOND EMBODIMENT]

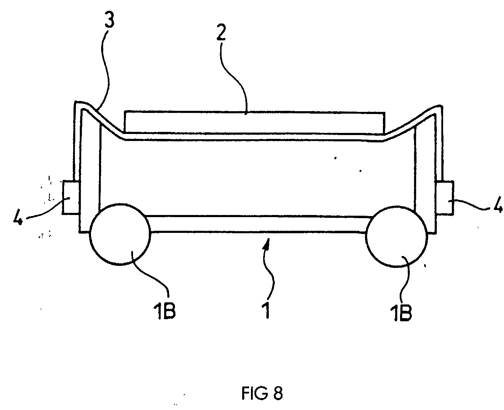

In the second embodiment, as shown in FIG. 8, arrangement of weights 4 is properly adjusted so that a sag is given in a heat-resistant fiber sheet 3 when a glass plate 2 is placed on the heat-resistant fiber sheet 3, and then the glass plate 2 is softened to undergo gravitational bending process. Optionally, under the same conditions, the glass plate 2 is softened, and is then placed together with the heat-resistant sheet 3 on the lower mold of the press-working mold 5 to undergo gravitational bending process. Thereafter, as shown in FIG. 4, the glass plate 2 together with the heat-resistant fiber sheet 3 is pressed into a desired curve between the upper mold 5A and the lower mold 5B of the press-working mold 5. With this approach, advantageously, a curved shape with a small curvature can be formed.

The glass plate 2 that has finished press working in the press-working mold 5 is gradually cooled or quenched as necessary to enhance its surfaces. When the glass plate 2 is quenched, the grain of the heat-resistant fiber sheet 3 may be utilized and supplied with cooling fluid.

Preferably, the above heat-resistant fiber sheet 3 is marked to indicate an alignment mark on which the glass plate 2 is to be placed. On the support base 1A of the carriage 1 on which the heat-resistant fiber sheet 3 is stretched, preferably, a guide roller for preventing damage of the heat-resistant fiber sheet 3 is attached.

Although the preferred embodiments of the present invention have been described above, various modifications and changes may be made in the present invention without departing from the spirit and scope thereof.

As described above, with the method of forming a curved shape of a glass plate according to the present invention, the glass plate is placed on a heat-resistant fiber sheet having an area larger than that of the glass plate, and a portion of the heat-resistant fiber sheet on which the glass plate is not placed is held so that the glass plate is supported through the heat-resistant fiber sheet. Under these conditions, the glass plate is transported, softened, and curved. Accordingly, the glass plate can be bent evenly without leaving any traces of a holding tool or the like on the worked surface of the glass plate.

## Claims

1. A method of forming a curved shape of a glass plate comprising the steps of:
placing the glass plate on a heat-resistant fiber sheet having an area larger than that of the glass plate;
supporting the glass plate with the heat-resistant fiber sheet by holding a portion of the heat-resistant fiber sheet on which the glass plate is not placed;
transporting the glass plate;
softening the glass plate; and
forming a curved shape of the glass plate.

2. A method of forming a curved shape of a glass plate according to claim 1, wherein the placing step includes covering a frame-shaped support base with the heat-resistant fiber sheet of which the area is larger than that of the support base;
wherein the supporting step includes stretching the heat-resistant fiber sheet on the frame-shaped support base utilizing a weight hung on a periphery of the heat-resistant fiber sheet; and
wherein the transporting step is performed utilizing a carriage on which the placing and supporting steps have been performed.

3. A method of forming a curved shape of a glass plate according to any one of claims 1 and 2, wherein the forming step includes utilizing a pair of upper and lower molds to form the glass plate together with the heat-resistant fiber sheet into a predetermined curved shape.

4. A method of forming a curved shape of a glass plate according to claim 3, wherein an upper heat-resistant fiber sheet is interposed between the upper mold and the glass plate.

5. A method of forming a curved shape of a glass plate according to any one of claims 1 through 4, wherein the forming step includes:
gravitational bending performed by keeping the glass plate on the heat-resistant fiber sheet after the step of softening the glass plate; and
press working to form the glass plate into a predetermined curved shape.

6. A method of forming a curved shape of a glass plate according to any one of claims 1 and 2, wherein the forming step includes gravitational bending performed by keeping the glass plate on the heat-resistant fiber sheet after the step of softening the glass plate to form the glass plate into a predetermined curved shape.
